# EUROPEAN PATENT SPECIFICATION

(11) **EP 3 440 585 B1**
(45) Date of publication and mention of the grant of the patent: **14.04.2021**
(21) Application number: 16720071.6
(22) Date of filing: 21.04.2016
(51) Int. Cl.: G06F 21/57

(54) **SYSTEM AND METHOD FOR ESTABLISHING A SECURELY UPDATABLE CORE ROOT OF TRUST FOR MEASUREMENT**
SYSTEM UND VERFAHREN ZUR HERSTELLUNG EINES SICHEREN AKTUALISIERBAREN VERTRAUENSANKERS ZUR MESSUNG
SYSTÈME ET PROCÉDÉ D'ÉTABLISSEMENT D'UNE RACINE CENTRALE DE CONFIANCE POUVANT ÊTRE MISE À JOUR DE MANIÈRE SÉCURISÉE PERMETTANT DE MESURER

(43) Date of publication of application: 13.02.2019
(73) Proprietor: Huawei Technologies Co., Ltd., Longgang District Shenzhen, Guangdong 518129 (CN)
(72) Inventor: SERB, Mihai, 80992 Munich (DE); VLASCEANU, Ioan-Silviu, 80992 Munich (DE)
(74) Representative: Pfenning, Meinig & Partner mbB
(86) International application number: PCT/EP2016/058942
(87) International publication number: WO 2017/182088

(56) References cited:
- US-A1- 2004 111 633
- US-A1- 2012 151 199
- US-A1- 2016 085 558

## Description

### FIELD

The present application relates to the field of Trusted Computing, TC.

### BACKGROUND

Trusted Computing, as defined by the Trusted Computing Group (TCG), is a mechanism for validating software integrity of a computing system. It comprises a Trusted Platform Module, TPM, conventionally implemented as a dedicated hardware device, which provides facilities for storing and reporting measurements of specific software.

A software component complying with TC may be adapted to measure another software component, and to execute that software component afterwards. A software component executed as a first software component in a sequence of software components may instead or additionally be capable of measuring itself. Such a software component may be referred to as Core Root of Trust for Measurement, CRTM. The CRTM may be located at a position in memory from which a computing device starts execution of a boot process. For security reasons, this memory is generally immutable and therefore trusted.

A TPM may include or be associated with one or more Platform Configuration Registers, PCR. One particular purpose of PCRs is storing measurements of software components, said measurements taken according to TC definitions, such as by applying hash functions. Storing such a measurement in a PCR includes combining the measurement with a present value already stored in the PCR, such as a measurement taken at an earlier occasion with regard to the same software component, including an earlier version of the same software component. Combining may be performed, for example, by concatenating the present value with the new measurement, and by storing the concatenated value in the PCR. The value stored in a PCR hence depends not only on the previous value stored therein, but on multiple values or all values ever stored in the PCR.

Encrypting data by the TPM based on some PCR values is referred to as sealing said data to the PCR. Sealing data refers not only to encrypting the data with a key controlled by the TPM, but also to remembering the particular state of the TC environment, such as is represented by values stored in one or more PCRs at the time of sealing data. Conversely, the data can be obtained again by unsealing, which requires the PCRs being in the same state they were at the time the data was sealed.

US 2012/0151199 A1 addresses secure encrypted boot with simplified firmware update wherein a security module, such as a TPM, identifies a change to a boot configuration used in a secure boot operation. Another document concerning updating boot code is US 2016/0085558 A1. A method for maintaining security of a BIOS is desrbed in US 2004/0111633 A1.

### SUMMARY

The present invention provides a method and a device according to the independent claims for protecting computing devices against unauthorized software changes while permitting legitimate updates.

The described embodiments are to be considered only as illustrative and not restrictive. The scope of the invention is defined by the appended claims, the dependent claims define further embodiments of the invention.

According to a first aspect, a method for implementing trusted computing is provided, comprising: executing, by a central processing unit, CPU, each respective software component in a sequence of software components stored on a storage device at a location from where the CPU is configured to load a first instruction at a boot process, said storage device being write-protected; measuring, by each respective software component, a next software component in the sequence, and providing the resulting measurement to a security module connected to the CPU; authorizing, by the security module, an update of one or more software components in the sequence of software components based on the provided resulting measurements; and upon successful authorization by the security module changing, by the CPU, the status of the storage device to be write-enabled so as to perform the update of one or more software components.

This first aspect effectively performs a boot process comprising one or more software components executed in a sequence, wherein each software component stores a measurement of its successor. Advantageously, the software components reside on a storage device that is write-protected, hence blocking any changes, be them benign or malevolent. Special measures are defined by the first aspect for legitimately updating a software component. These measures include authorizing a requesting party to update a software component, and setting the storage device to be writable in response to successful authorization. In other words, malevolent modifications to software components in the boot process are prevented, whereas legitimate updates are accomplished.

According to a first possible implementation, the authorizing of the first aspect comprises: comparing, by the security module, the provided resulting measurement to a reference measurement protected by the security module.

This first implementation advantageously ensures that a software component has not been modified at the time of the authorization. This advantage is based on a reference measurement taken at an earlier point in time, such as during a previous boot process.

A second possible implementation of the first aspect further comprises: updating, by the security module, a register with the resulting measurement, said register corresponding to the measured software component, wherein the authorization step is performed based on one or more values of respective registers configured to hold a measurement of a corresponding software component in the sequence of software components.

This second possible implementation is advantageous in that it ensures that all software components already executed have not been modified at the time of the authorization. This is achieved by considering the values of all registers corresponding to measurements of the software components, including those for software components that have not yet been measured and executed. The registers corresponding to these not yet measured and executed software components will hold default values and the security module will check this during the authorization procedure. The security of the update process is thus greatly improved, as neither benign nor malevolent updates are permitted once the operating system kernel has been launched at the end of the software components sequence. An operating system is more vulnerable to remote attacks. Furthermore, this implementation provides a significant level of trust that no malevolent access has been attempted or is presently being made. The implementation also provides additional technical details on storage of measurements, namely be writing them to registers, wherein one register is associated with each of the software components.

A third possible implementation defines that one of the software components is a Core Root of Trust for Measurement, CRTM, module and/or the security module is a Trusted Platform Module, TPM.

This advantageously provides for seamless integration of the aforementioned aspect and of implementations with conventional TC environments, to the extent that authorized updates of CRTM may be applied, and that an existing TPM may be used.

A fourth implementation of the first aspect provides for measuring said software component including storing the resulting measurement in a Platform Configuration Register, PCR, associated with the security module.

This provides a technical detail on how the first aspect can possibly be combined with TC, as PCR registers are conventionally associated with security modules such as TPMs and can advantageously be used for measurements stored and read in the course of the above aspect and implementations.

Another, fifth, possible implementation comprises: sealing a password to the security module based on the resulting measurement; in response to a request for updating one or more of said software components, unsealing the password by said security module and providing said password to the storage device so as to change the status of the storage device to write-enabled; and updating one or more of said software components.

This implementation takes advantage of conventional sealing, used here in a novel way. Accordingly, the data sealed to the security module and unsealed therefrom is a password set initially and provided in the course of the authentication. As defined in the introductory section above, sealing data includes recording a specific state of an environment at the time of the sealing. Unsealing is only possible if the same state is present at the time of the unsealing. The fifth implementation allows for sealing and unsealing a password that is required for granting write access to software components stored on the security module. Using sealing for managing the password is advantageous in that it ensures access is only granted if none of the software components has been modified, and if current measurements of the software components stored are actually available. This further increases the security level required for updating software components.

According to a sixth implementation of the first aspect, changing the status of the storage device to be write-enabled comprises issuing a request to the security module to write one or more bit values to one out of one or more memory spaces in a memory of the security module, said memory space specified in the request by an index value associated with the memory index, and further comprises receiving, by said security module, said one or more bit values from the request, writing said bit values to said memory space, and passing said bit values to a general purpose input/output, GPIO, pin in the security module, wherein the GPIO pin is connected with a write-protection, WP, pin of the storage device, and wherein the bit value is received at the WP pin and applied in the storage device to change the status of the storage device to be write-enabled.

This aspect advantageously permits updates to software components only under the condition that a certain hardware mechanism is successfully operated. This hardware mechanism comprises a WP pin of the storage device in connection with the GPIO pin of the security module, and links memory space associated with the GPIO pin to the storage device for updates of software components in the memory space.

A seventh possible implementation of the first aspect comprises that the request is a TPM NVRAM management command.

This implementation advantageously uses conventional TPM NVRAM commands to enable write-protection, hence reducing the implementation overhead.

According to a second aspect, a computing device is provided, comprising: a security module, preferably a Trusted Platform Module, TPM; a central processing unit, CPU, the CPU being connected to the security module; and a storage device configured to be in a write-protected status, and to store a sequence of software components at a location from where the CPU is configured to load a first instruction at a boot process, wherein the CPU is configured to execute each respective software component in the sequence of software components, each respective software component being configured to measure a next software component in the sequence, and to provide a resulting measurement to the security module, the security module is configured to authorize an update of one or more software components in the sequence of software components based on the provided resulting measurements; and the CPU or security module is further configured to change the status of the storage device to be write-enabled upon successful authorization by the security module so as to allow an update of one or more software components.

Similar to the first aspect, the second aspect advantageously prevents malevolent write access to software components that are executed in a boot process, at the same time accomplishing legitimate updates to these software components.

According to a first possible implementation of the second aspect, the security module is further adapted to compare the provided resulting measurement to a reference measurement protected by the security module to authorize the update.

This advantageously ensures that software components have not been modified at the time an update is requested. Because measurements are maintained for each software component, a simple comparison of an older, or reference, measurement to a current measurement ensures that the software component has not changed between two subsequent boot processes.

A second possible implementation of the second aspect defines that the security module is further configured to: update a register with the resulting measurement, said register corresponding to the measured software component, and to authorize the update based on the value of the updated register and on the value of each register designated to hold a measurement of a corresponding software component in the sequence of software components.

This second implementation effectively restricts authorization for an update to the condition that all current measurements of the already executed software components match their respective reference measurements saved during a previous boot process. Accordingly, updating is only permitted if none of the software components have been modified since the last boot process.. This is enforced by, as previously said, values of all registers designated to store measurements being taken into consideration during the authorization. In particular, the values of the registers corresponding to software components that have not been yet measured and executed are considered. The registers corresponding to these not yet measured and executed software components will hold default values and the security module will check this during the authorization procedure. The security of the update process is thus greatly improved, as neither benign nor malevolent updates are permitted once the operating system kernel has been launched at the end of the software components sequence. An operating system is more vulnerable to remote attacks.

A third possible implementation comprises that one or more of the software components are Core Root of Trust for Measurement, CRTM.

This advantageously teaches using CRTM from a TC environment for embodiments disclosed herein, in particular by treating one of the software components as the initial CRTM when executing the sequence of software components. The significance of the CRTM in a TC environment is that it is associated with a first measurement that is not measured by a preceding software component but by the CRTM itself. The CRTM therefore requires special attention with regard to security. According to the third implementation of the second aspect, updating software components, including the CRTM, is only permitted under the condition that authorization is granted.

According to a fourth possible implementation, the CPU is further configured to: execute one of the software components in the sequence of software components to seal a password to the security module based on the resulting measurements; wherein the security module is adapted to unseal, in response to a request for updating one or more of said software components, the password and to provide said password to the storage device so as to change the status of the storage device to be write-enabled; and to update one or more software components of said software interrupts.

This advantageously uses the sealing/unsealing mechanism available in TC environments for securely storing a password. Specifically, sealing and unsealing the password is provided under the condition that a same state of the environment is present as at the time the password was written the last time. This state is represented as the measurements of software components presently stored. In other words, the password is only provided if the current measurements correspond to those measurements taken at the last time the password was written or used.

A fifth possible implementation of the second aspect comprises that the security module includes a memory and a general purpose input/output, GPIO, pin connected to said memory, and is further configured to receive a request from the CPU for changing the status of the storage device to be write-enabled, said request including one or more bit values and an index value associated with one out of one or more memory spaces in said memory, wherein the security module is further configured to receive said one or more bit values from the request and write said bit values to said memory space, wherein the security module is further configured to pass said bit values from said memory to said GPIO pin upon writing; and wherein the storage device includes a write-protection, WP, pin connected to said GPIO pin, and is configured to change a status of the storage device to be write-enabled in response to receiving a bit value associated with said status.

This advantageously provides for secure updating of software components. By writing through a selected memory space, a GPIO pin, and a WP pin, a separate path is established for enabling and disabling write-protection of the storage device. A different path is used for the actual update of software components on the storage device. In many embodiments, the first path is subject to measurements taken of the software components at the time of the update, hence ensuring that write-protection is modified from a trustable source. The second path is directly between CPU and storage device, hence providing for high efficiency when writing to the storage device.

A further possible implementation comprises that the aforementioned commands are TPM NVRAM management commands. This aspect has been discussed already and is advantageous for the reasons already provided above.

### BRIEF DESCRIPTION OF THE DRAWINGS

Figures 1, 2, 5 and 6 illustrate methods in accordance with embodiments of the invention.
Figures 3 and 4 illustrate computing devices in accordance with embodiments of the invention.

### DETAILED DESCRIPTION

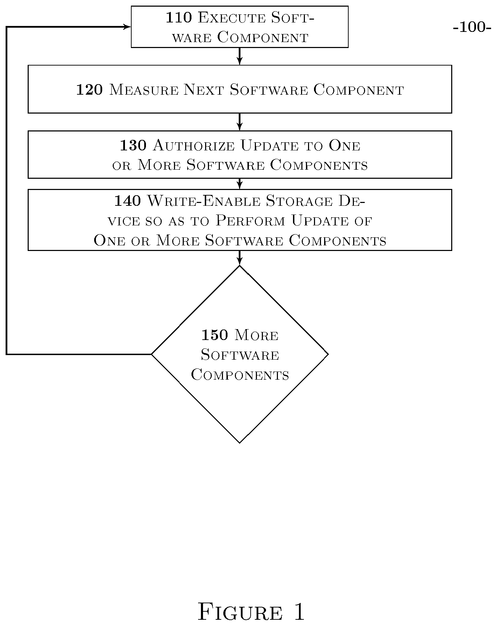

Figure 1 illustrates a method 100 according to embodiments of the invention. Method 100 is carried out by a central processing unit CPU, such as CPU 430 discussed below, and is primarily intended to be carried out in the context of a boot process of a computing device. Booting a computing device typically requires one or more software components to be executed. For example, a predefined sector of a storage device, such as storage device 410 discussed below, may be read into main memory and be executed. Subsequently, one or more further software components of a sequence of software components are executed. Finally, an operating system kernel is launched. A boot loader may be executed as a last software component before the operating system kernel is launched.

The software components may be stored on the storage device. The storage device may be write-protected, in order to prevent unauthorized modification of any of the software components.

Method 100 starts at block 110 with executing a software component. When performing block 110 for the first time, the first software component of a sequence of software components may be chosen for execution, such as because it is located at a position where booting a computing device begins. In particular embodiments, the software component may be a CRTM with the properties described above. While executing, the software component may carry out various functions, among them being measuring a next software component in the sequence, here illustrated at block 120.

The next software component may be a next software component according to its position in the sequence directly subsequent to the executing software component. In certain embodiments, this position may be based on contiguous storage of software components in a storage device. In some embodiments, the executing software component may decide for itself which software component to select as a next software component. Still in further embodiments, the executing software component may measure itself instead or in addition to a next software component. This may particularly be the case if the executing software component is the first in the sequence, and may also be the case if the executing software component is a CRTM that is not measured by any other preceding software component, due to its position as a first software component in the sequence.

Measuring a software component may include any function suitable to map the content and/or properties of the software component to one or more unique values. In one embodiment, measuring the software component may include calculating one or more hash values from the software component. In other embodiments, measuring may include recording one or more attributes associated with the component, such as a most recent modification time or the date of creation of the software component. In one embodiment, each software component in the sequence measures its successor in the sequence. However, alternatives to this embodiment comprise a single software component, such as the first software component in the sequence that measures all subsequent software components in the sequence. In certain embodiments, conventional measuring techniques associated with a CRTM may be performed by the software component.

The measurement may be stored for future reference. In one embodiment, the measurement may be stored in a PCR.

Subsequent to measuring, one or more actions not explicitly illustrated in figure 1 may be taken. For example, the measurement obtained at block 120 may be compared to a reference measurement, as part of the authorization in block 130. In one embodiment, the reference measurement may have been created by an earlier execution of method 100, such as during a previous boot process of the same computing device that method 100 is presently being performed on. However, method 100 may also be performing for a first time, such as during installation of a computing device. In this case, reference measurements may be available as default values provided by a manufacturer.

In a typical scenario, the measurement taken by a software component matches its reference measurement. In this case, and without any specific incidents such as those discussed below with regard to blocks 130 and 140, method 100 will continue at block 150. Here, a determination is made whether further software components exist in the sequence, or whether the executing software component was the last in the sequence. The last software component to execute before an operating system kernel may be a boot loader.

At some stage during method 100, such as after taking the measurement at block 120, notification of an update may be received. For example, a request for updating a software component may be received. The request may be received via a dedicated process invoked by user interaction, such as by a user selecting the dedicated process via a BIOS menu. Alternatively, the request may be received by receiving an interrupt that resulted from a hardware device being attached to the computing device. For example, a user may be attaching a hardware device with one or more replacement software components. In response to receiving the request, the processing of the sequence of software components may be interrupted or stalled, and an authorization process may be executed at block 130. In response to receiving the request and upon successfully performing authorization at block 130, the storage device may temporarily be enabled to be writable at block 140.

In certain embodiments, this may be implemented using a storage device that may be write-enabled via a software command. One example of such a storage device is a NOR flash chip. The software command to write-enable the storage device may be issued by the software component that is currently executing. In parallel or subsequent to configuring the storage device this way, one or more replacement software components may be received as an update. In one embodiment, one or more replacement software components may be retrieved from a hardware device attached to the computing device. In other embodiments, replacement software components may be retrieved via a network connection. The address of the replacement software components may be automatically determined, such as by accessing and analyzing a hardware device, or may be determined based on details entered by a user, such as by providing them in an interactive menu. The one or more replacement software components may be intended to replace the software component currently being executed, or to be inserted additionally in the sequence of software components. The user may wish to also remove a software component from the sequence. This may affect the software component presently under execution or any other software component in the sequence. Replacement, addition or removal may also affect the first software component, in particular a CRTM, or the boot loader. In one embodiment, the operating system kernel may be subject to the intended replacement.

These updating steps may be performed by a preselected one of the software components, such as the software component that was executed most recently when performing the update.

When modifying any of the software components, a modification of measurement values may be made in order to maintain integrity of the computing device. Integrity of the computing device requires that a measurement of a software component matches a reference measurement. In one embodiment, method 100 therefore takes a measurement of each of the one or more replacement software components and stores it. While the measurement may be different from the most recently stored measurement, it will be detected as a reference measurement when executing the boot process in future, and will match the measurement of the corresponding software component, unless undue modification has occurred. All embodiments have in common that a valid measurement of the replacement software component is stored for future reference once the update has completed. If the replacement software components include software components that are inserted into the sequence, rather than replacing one or more software components, the sequence is adjusted to include the replacement software components, such as by storing all software components in contiguous locations of the storage device, or by setting memory pointers in the storage device that define the order of software components in the sequence.

After the update has completed, the storage device may be set to be write-protected again, and method 100 may proceed at block 150 as described earlier. Eventually, the operating system kernel may be launched, and method 100 ends.

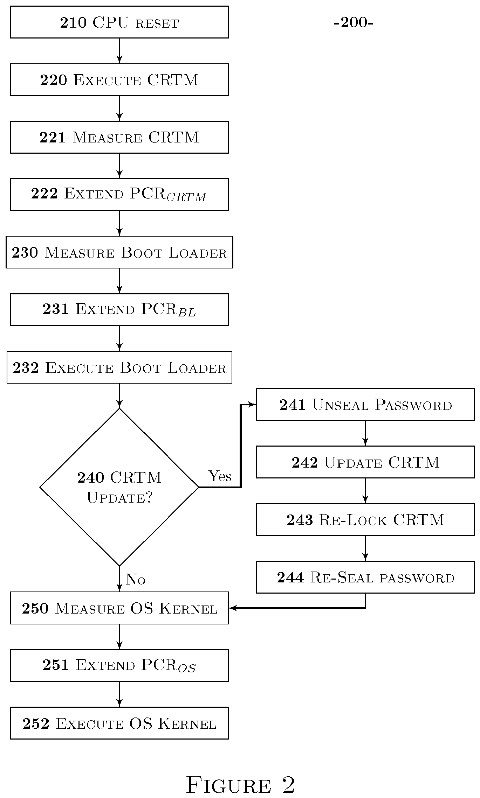

Figure 2 illustrates a method 200 that represents further embodiments. Method 200 may be regarded as comprising embodiments of method 100 described above, and may implicitly include any details described with regard to method 100. However, method 200 shall not be construed as restricting method 100, and method 100 is operable without the specific details described in the following with regard to method 200.

Method 200 starts at block 210 with resetting a CPU, such as CPU 430, of the computing device. The CPU may be reset due to a boot or reboot of the computing device, as is performed when the computing device is switched on by a user.

Subsequently, block 220 may be performed. At Block 220, a first software component in a sequence of software components may be executed. As illustrated in figure 2, this first software component may be a CRTM which is capable of measuring itself, as is illustrated by block 221 that is executed subsequent to block 220. At block 222, a PCR_{CRTM} that is associated with the CRTM may be extended to comprise the measurement taken by the CRTM. As already described, extending the PCR may comprise concatenating the current PCR value with the new measurement and hashing the result.

Unless more software components are included in the sequence, method 200 may proceed with measuring a boot loader at block 230. The boot loader may be regarded as one of the software components in the sequence, or may be regarded as a distinct component to be executed after the sequence. Subsequent to measuring the boot loader, the resulting measurement is stored by extending a corresponding PCR_{BL} at block 231, such as by concatenating values as described. Afterwards, the boot loader is executed at block 232.

At block 240, decision on updating a software component is made, such as in response to a request. The update is illustrated as concerning a CRTM, but is not restricted in this regard. Further, the decision is illustrated as being made after executing the boot loader. However, the decision may be made at any other stage during method 200, such as after any of the operations represented by blocks 210 to 232. The decision may be based on any mechanism described herein, such as on user interaction or on detection of a hardware device being attached to the computing device.

Similar to block 130 in method 100, an authorization operation may be started in response to the decision. This comprises unsealing a password at block 241. The password may have been set during an initial installation of the computing device. In one embodiment, the password may have been automatically generated as a random string of bits or characters. In particular, the password may have been sealed to a dedicated PCR at the time of installation. Due to the nature of sealing, the password may have been stored such that it may only be unsealed if the values of one or more PCRs are identical to the corresponding values of the same PCRs at the time of setting the password. During an initial installation, these values may have been set based on measurements of software components as initially installed on the computing device, such as on storage device 410 discussed further below. The password may be provided to the storage device 410, so as to enable writing on the whole device or the parts that were write-protected, such as the individual sectors of the storage device that store the software component, in this case the CRTM.

If the password is successfully unsealed at block 241, it is verified by the storage device. If successful, the storage device is configured to be write-enabled. This may be performed by issuing a dedicated software command that configures the storage device accordingly. At block 242, the software component is updated, such as from a hardware device attached to the computing device, or from a network address provided by user interaction. Also as described, updating the software component may include updating measurements, in order to maintain integrity. At block 243, the software component is locked again, such as by setting the storage device to write-protected again.

Before or after locking the software component, the password may be re-sealed at block 244. Re-sealing is necessary as sealing depends on one or more measurements in the PCRs. Because these measurements have changed in the course of updating the software component, the sealing operation for the password must be repeated in order for the password to be unsealable again.

After the update has completed, method 200 proceeds at block 250 with measuring the operating system kernel, followed by blocks 251 and 252, where a corresponding register PCRos is extended and the operating system kernel is finally executed. Method 200 also proceeds at block 250 if the decision in block 240 is negative. Updating a software component is illustrated as being performed between executing the boot loader and executing the operating system kernel. However, the request for an update may be received and performed at other stages of method 200, such as directly after block 221. No update is possible, however, after the operating system kernel has started executing. This is due to the fact that the PCR settings are different at the time of the operating system kernel having started, compared to the PCR settings at the time the password was sealed. This difference is based on PCRos which is zero at the time of sealing the password, and is extended after the operating system kernel having started. Any access to the password, and hence any writing access to the software components, is therefore prevented after the operating system kernel starts.

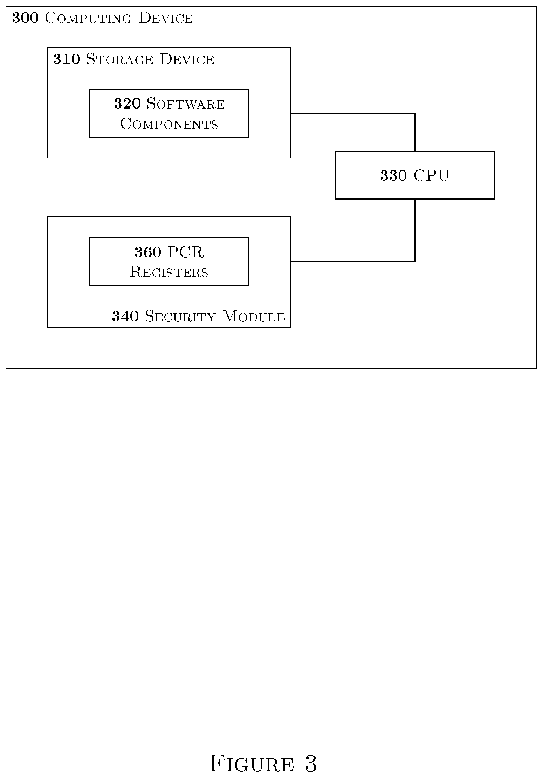

Figure 3 illustrates a sample computing device 300 suitable for implementing embodiments described herein. In particular, computing device 300 may be suitable for carrying out method 100 or method 200, and may include a CPU 330 and storage device 310. As illustrated, storage device 310 may store one or more software components 320, including a CRTM and/or an operating system kernel. PCRs 360 are located in security module 340, which is also available on computing device 300. One possible embodiment of storage device 310 is a flash memory, in particular a NOR flash memory that is capable of providing password protection for individual sectors. Storage device 310 may be configured to be write-enabled or write-protected based on a software command. Such write-protection or write-enabled setting may be persistent across boot processes, which means that the setting will be maintained after the storage device has been switched off for some time due to computing device 300 being switched off.

Security module 340 may be capable of applying TPM operations to data on storage device 310, such as sealing and unsealing data.

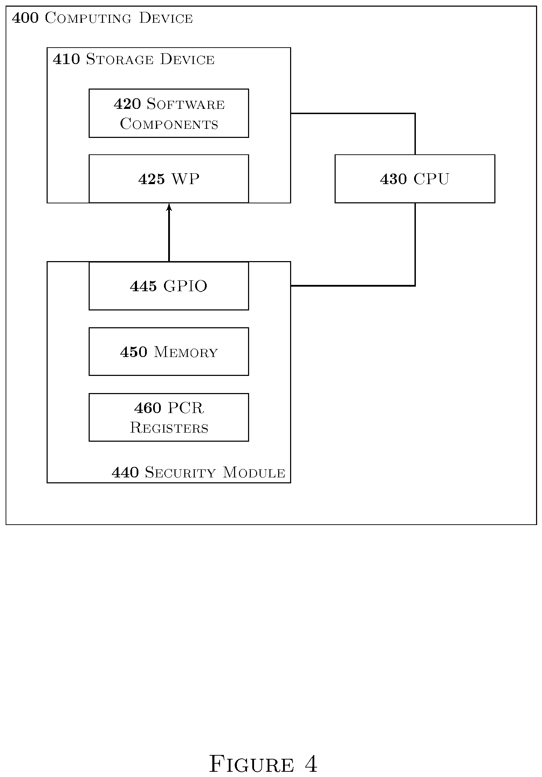

Figure 4 illustrates a sample computing device 400 suitable for implementing embodiments described herein. Computing device 400 is compatible with computing device 300 discussed above with regard to figure 3, to the extent that it includes at least the components of computing device 300. Computing device 400 is hence capable of performing any of the methods discussed above to be performed on computing device 300. Vice versa, computing device 300 is not to be construed as limited to the further details illustrated in computing device 400, because none of these further details is necessarily required for operation of computing device 300.

Computing device 400 comprises a CPU 430, storage device 410, and security module 440, which have the same features as the components of the same name as discussed above. In addition to these features, storage device 410 comprises a write protection (WP) pin 425, and security module 440 comprises one or more general purpose input/output (GPIO) pins 445. Security module 440 also comprises a memory 450 and PCR registers 460.

WP pin 425 is configured to accept a command, such as a command provided by GPIO pin 445. In some embodiments, the WP pin 425 accepts only a single bit interpreted as a command. A command or bit value received at the WP pin 425 defines whether the storage device 410, in particular a storage space for software components 420 in the storage device 410, is to be write-protected or not. In one embodiment, storage device 410 is implemented as a NOR flash chip that may be write-protected based on a bit value, such as the bit value reflected by the WP pin 425. The WP pin 425, as is illustrated, may only be set from the GPIO pin 445, but not directly from CPU 430. However, the CPU 430 may be configured to modify software components 420, provided that storage device 410 is not write-protected.

GPIO pin 445 comprises one or more pins. In one embodiment, exactly one GPIO pin 445 is connected to the WP pin 425, and provides a command or an output of a command to the WP pin 425. In particular, the GPIO pin 445 may be configured to provide a single bit value to the WP pin 425, said single bit value defining whether the storage device 410, in particular the software components 420, is/are to be write-protected or not. In one embodiment, the GPIO pin 445 connected to the WP pin 425 is one of a plurality of GPIO pins that is otherwise unused.

Memory 450 in security module 440 provides an addressable memory component that may be divided into one or more memory spaces. A memory space may be created in response to a command called by the CPU 430. Execution of the command, with successful creation of a memory space in memory 450, is subject to the caller being permitted to create the memory space. In one embodiment, the caller is one of the software components 420, said software component running on the CPU 430 and requesting creation of a memory space. In response to this request, the security module 440 determines, based on the PCR registers 460, whether a current measurement of the software component complies with a corresponding measurement maintained in the PCR registers 460. In response to a positive determination, the memory space is created in memory 450. In one embodiment, the request includes at least a unique identifier, also referred to as an index, for the memory space that may be used to refer to the memory space for subsequent write operations thereto. On some embodiments, the request also specifies size and access permissions of the memory space. However, specific embodiments use a fixed size, such as a size of one bit, and automatically set access permissions to write-protected, hence permitting access to the memory space only under the condition that the caller is permitted to write based on measurements maintained in the PCR registers 460. In other embodiments, the request may also comprise a single bit value to be written to the memory space. If the security module 440 is implemented as a TPM module, memory 450 may represent NVRAM memory and offer TPM NVRAM commands in order to create and/or access memory spaces.

As noted above, CPU 430 may call commands of the security module 440 to create or write to a memory space in memory 450. If permitted, the CPU 430 may select and write to a selected memory space. In one embodiment, a memory space may be created automatically in response to determining that no memory space exists for a specified index. Memory 450 is connected to the GPIO pin 445. In response to successfully selecting a memory space by its index, bits written thereto are signaled to the GPIO pin 445 that is connected to WP pin 425. In one embodiment, the GPIO pin 445 always shows the most recent bit value written to memory 450. In some embodiments, the GPIO pin 445 only shows the most recent bit value written to memory 450 if a predefined index was selected. For other indices, the GPIO pin 445 may ignore bits written to memory 450. It is hence possible to write to memory 450 without modifying write-protection of storage device 410.

Because WP pin 425 always reflects the current value of the GPIO pin 445, and because the WP pin 425 is further configured to set write-protection of the storage device 410 based on this value, a software component that runs on CPU 430 is effectively able to change write-protection of the storage device by writing to a memory space, under the condition that its measurements comply with corresponding values in the PCR registers 460.

Once the storage device 410 is set to no longer being write-protected, CPU 430 may perform an update of one or more of the software components 420. The update may be performed by writing directly to the memory storing the software components 420 in storage device 410, without interaction with the security module 440. After the update is complete, CPU 430 enables write-protection of storage device 410 again, by writing a corresponding bit value to the selected memory space, thereby effectively protecting storage device 410 again.

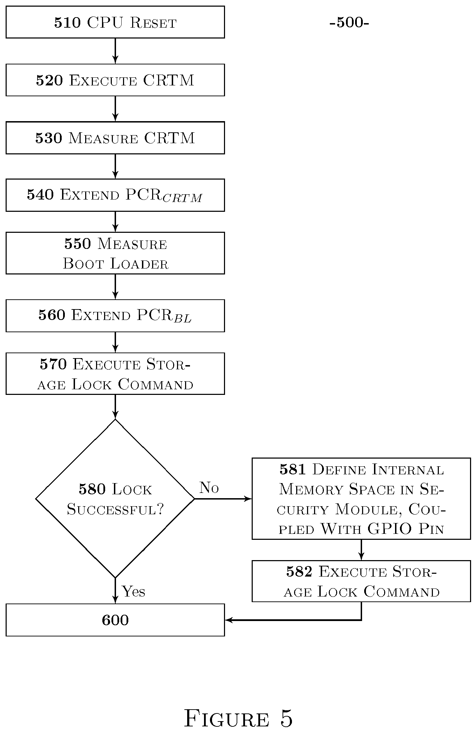

Figure 5 illustrates a method 500 for setting a storage device, such as storage device 410, to a write-protected state. Method 500 is illustrated as linked with another method 600, discussed below, but can be performed without method 600.

Method 500 starts at block 510, where a CPU, such as CPU 430 of computer device 400, is reset. Subsequently, one or more software components are executed by the CPU. A first of these may be a CRTM, already discussed above. The CRTM is executed at block 520, and creates a measurement of itself at block 530. Details of measuring a software component have been provided above. The CRTM is associated with a PCR_{CRTM} register included in the PCR registers 460, and the measurement taken at block 530 is stored in the PCR_{CRTM} register, such as by a TPM extend instruction.

Between blocks 540 and 550, one or more further software components may be executed, wherein each of these components measures its successor and provides the measurement to a corresponding PCR register.

At block 550, a boot loader is measured. For example, the boot loader can be measured by the CRTM, or can be measured by a software component executed as a last component before block 550. The boot loader measurement is stored in a register PCR_{BL} corresponding to the boot loader. Again, storing the measurement may comprise extending PCR_{BL} as described before.

At block 570, a storage lock command is executed by the CRTM, in order to establish write-protection of the storage device that stores the software components, in particular the CRTM and the boot loader. An example of this storage device is storage device 410 discussed above.

Locking the storage device is performed by issuing a request by the CRTM to the security module that stores the PCR registers corresponding to the software components, including CRTM and boot loader. An example of this security module is security module 440.

The request may be implemented as a TPM NVRAM command provided by the security module, and includes at least a bit value that is intended to lock the storage device. In the embodiment illustrated in figure 5, the request further comprises an index, or unique identifier, that shall be used at the security module to select one out of a plurality of memory spaces. These memory spaces reside on a memory in the security module, such as in memory 450. If the index provided in the request corresponds to an existing memory space, that memory space is selected by the security module, and the bit value provided in the request is written thereto.

Memory 450 is connected to GPIO pin 445. GPIO pin 445 may be configured to reflect the most recent bit written to memory 450. In certain embodiments, only bits that are written to predefined memory spaces, such as memory spaces identified by a predefined index, are received at the GPIO pin. These bits are passed on to WP pin 425. Subsequently, they are used to control write-protection of storage device 410, in particular of the software components 420.

Writing the bit value is subject to two conditions. First, upon receipt of the aforementioned request, the security module determines whether writing access to memory 450 is permitted for the caller of the request. This determination is made based on the PCR registers that correspond to the measurements of the software components that were already executed, as well as on PCR registers corresponding to software components, including the kernel, that were not executed yet. If measurements mismatch, access is denied, and the locking request is not executed. In particular, access is denied if the PCR register corresponding to the kernel has any other value than zero. Second, upon receipt of the aforementioned request, the security module determines whether a memory space indicated by the request actually exists in memory 450.

If locking the storage device fails for lack of the second condition at block 580, method 500 proceeds to block 581, where a memory space indicated by the request is created. This may involve using a size and index provided by the request. In one embodiment, the size is one bit by default.

Method 500 subsequently executes the storage lock command again at block 570. Provided that a measurement of the caller of the request complies with the corresponding PCR value, the storage device is now locked, and hence write-protected.

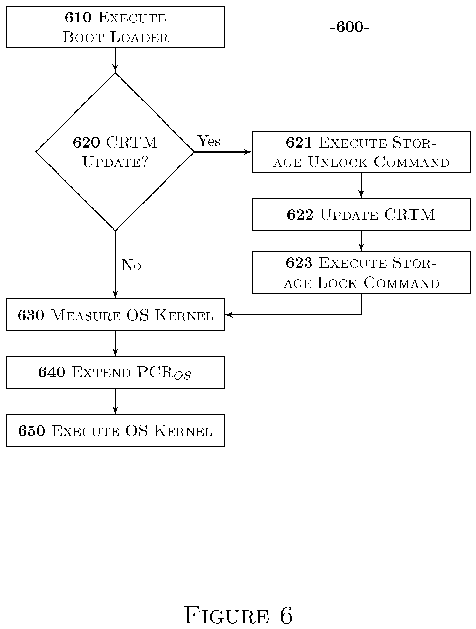

Figure 6 illustrates further steps that may be performed after method 500.

At block 610, a boot loader is executed. The CPU determines at block 620 whether the CRTM is to be updated, such as based on an event indicating an available update, or a replacement CRTM appearing at a predefined location. As an alternative to the CRTM, any one of the software components 420 may be subject to being updated.

In response to determining that no update is pending, method 600 proceeds to blocks 630, 640, and 650, where the operating system kernel is measured, and where a corresponding PCRos register is extended with the measurement. Finally, the kernel is executed. Thereafter, no further write accesses are possible to the storage device for as long as the kernel is running. This is due to the fact that a modification of write-protection of the storage device is only permitted if current measurements in the PCR registers match the measurements taken by all software components.

In response to determining that an update is pending, method 600 proceeds to block 621, where a command to unlock the storage device is executed. This command is similar to the request discussed above with regard to blocks 570 and 582 of figure 5, to the extent that it is only performed if measurements maintained in the PCR registers comply with measurements of software components executed so far, as well as with software components not executed yet, in particular the kernel. However, the request to unlock the storage device now includes a bit value that removes write protection of the storage device. As before, the request involves specifying a memory space, and writing a bit value thereto, wherein the bit value is signaled by the GPIO pin to the WP pin. The storage device is hence writable for subsequent commands issued thereto by the CPU.

In block 622, the update is performed. In the illustrated embodiment, the CRTM is updated. Embodiments also include updating any or all of the software components on the storage device. This update is performed by direct interaction of the CPU with the storage device, without any operations performed on the security module.

At the block 623, the storage device is locked again by issuing a request by the CPU to the security module, and from the security module to the storage device via GPIO and WP pins. Afterwards, method 600 proceeds to blocks 630 to 650, discussed above.

## Claims

1. A method (100) for implementing trusted computing, the method (100) comprising:
executing, by a central processing unit, CPU (330, 430),each respective software component in a sequence of software components (320, 420), stored on a storage device (310, 410) at a location from where the CPU (330, 430) is configured to load a first instruction at a boot process,;
measuring, by each respective software component, a next software component in the sequence, and providing the resulting measurement to a security module (340, 440) connected to the CPU (330, 430);
**characterized in that**
said storage device (310, 410) is write-protected, wherein the method further comprises
authorizing, by the security module (340, 440), an update of one or more software components in the sequence of software components (320, 420) based on the provided resulting measurements; and
upon successful authorization by the security module (340, 440) changing, by the CPU (330, 430), the status of the storage device (310, 410) to be write-enabled so as to perform the update of one or more software components.

2. The method (100) of claim 1, wherein the authorizing step comprises:
comparing, by the security module (330, 440), the provided resulting measurement to a reference measurement protected by the security module (340, 440).

3. The method (100) of claim 1 or 2, further comprising the step of:
updating, by the security module (340, 440) a register with the resulting measurement, said register corresponding to the measured software component;
wherein the authorization step is performed based on one or more values of respective registers configured to hold a measurement of a corresponding software component in the sequence of software components (320, 420).

4. The method (100) according to one of claims 1 to 3, wherein one of the software components (320, 420) is a Core Root of Trust for Measurement, CRTM, module and/or the security module (340, 440) is a Trusted Platform Module, TPM.

5. The method (100) of claim 4, wherein measuring said software component includes storing the resulting measurement in a Platform Configuration Register, PCR (360,460), associated with the security module (340, 440).

6. The method (100) of one of claims 1 to 5, further comprising:
sealing a password to the security module (340, 440) based on the resulting measurement;
in response to a request for updating one or more of said software components (320, 420), unsealing the password by said security module (340, 440) and providing said password to the storage device (310, 410) so as to change the status of the storage device (310, 410) to write-enabled; and
updating one or more of said software components (320, 420).

7. The method (100) of one of claims 1 to 5, wherein changing the status of the storage device (310, 410) to be write-enabled comprises issuing a request to the security module (340, 440) to write one or more bit values to one out of one or more memory spaces in a memory (450) of the security module (340, 440), said memory space specified in the request by an index value associated with the memory index, and further comprises receiving, by said security module (340, 440), said one or more bit values from the request, writing said bit values to said memory space, and passing said bit values to a general purpose input/output, GPIO, pin (445) in the security module (340, 440), wherein the GPIO pin (445) is connected with a write-protection, WP, pin (425) of the storage device (310, 410), and wherein the bit value is received at the WP pin (425) and applied in the storage device (310, 410) to change the status of the storage device (310, 410) to be write-enabled.

8. The method (100) of claim 7, wherein the security module is a Trusted Platform Module and the request is a TPM NVRAM management command.

9. A computing device (300, 400), comprising:
a security module (340, 440), preferably a Trusted Platform Module (340, 440), TPM;
a central processing unit, CPU (330, 430), the CPU (330, 430) being connected to the security module (340,440); and
a storage device (310, 410) configured to to store a sequence of software components (320, 420) at a location from where the CPU (330, 430) is configured to load a first instruction at a boot process, wherein
the CPU (330, 430) is configured to execute each respective software component in the sequence of software components (320, 420), each respective software component being configured to measure a next software component in the sequence, and to provide a resulting measurement to the security module (340, 440),
**characterized in that**
said storage device (310, 410) is in a write-protected status;
the security module (340, 440) is configured to authorize an update of one or more software components in the sequence of software components (320, 420) based on the provided resulting measurements; and
the CPU (330, 430) or security module (340, 440) is further configured to change the status of the storage device (310, 410) to be write-enabled upon successful authorization by the security module (340, 440) so as to allow an update of one or more software components.

10. The computing device (300, 400) of claim 9, wherein the security module (340, 440) is further adapted to compare the provided resulting measurement to a reference measurement protected by the security module (340, 440) to authorize the update.

11. The computing device (300, 400) of claim 9 or 10, wherein the security module (340, 440) is further configured to:
update a register with the resulting measurement, said register corresponding to the measured software component; and
to authorize the update based on one or more values of respective registers configured to hold a measurement of a corresponding software component in the sequence of software components (320, 420).

12. The computing device (300, 400) of one of claims 9 to 11, wherein one or more of the software components (320, 420) are Core Root of Trust for Measurement, CRTM.

13. The computing device (300, 400) according to claim 12, wherein said CPU (330, 430) is further configured to:
execute one of the software components in the sequence of software components (320,
420) to seal a password to the security module (340, 440) based on the resulting measurements;
wherein the security module (340, 440) is adapted to unseal, in response to a request for updating one or more of said software components (310, 420), the password and to provide said password to the storage device (310, 410) so as to change the status of the storage device (310, 410) to write-enabled; and to update one or more software components of said software components (310, 420).

14. The computing device (300, 400) of one of claims 9 to 12, wherein
the security module (340, 440) includes a memory (450) and a general purpose input/output, GPIO, pin (445) connected to said memory (450), and is further configured to receive a request from the CPU (330, 430) for changing the status of the storage device (310, 410) to be write-enabled, said request including one or more bit values and an index value associated with one out of one or more memory spaces in said memory (450), wherein the security module (330, 440) is further configured to receive said one or more bit values from the request and write said bit values to said memory space, wherein the security module (340, 440) is further configured to pass said bit values from said memory (450) to said GPIO pin (445) upon writing; and
the storage device (330, 410) includes a write-protection, WP, pin (425) connected to said GPIO pin (445), and is configured to change its status to be write-enabled in response to receiving a bit value associated with said status.

15. The computing device (300, 400) of claim 14, wherein the security module is a Trusted Platform Module and the request is a TPM NVRAM management command.

## Patentansprüche

1. Verfahren (100) zum Umsetzen einer vertrauenswürdigen Computemutzung (Trusted Computing), wobei das Verfahren (100) umfasst:
Ausführen durch eine zentrale Verarbeitungseinheit (Central Processing Unit, CPU) (330, 430) jeder entsprechenden Softwarekomponente in einer Sequenz von Softwarekomponenten (320, 420), die in einer Speichervorrichtung (310, 410) an einem Ort gespeichert sind, an dem die CPU (330, 430) konfiguriert ist zum Laden eines ersten Befehls in einem Boot-Vorgang;
Messen, durch jede entsprechende Softwarekomponente, einer nächsten Softwarekomponente in der Sequenz, und Bereitstellen der resultierenden Messung für ein Sicherheitsmodul (340, 440), das mit der CPU (330, 430) verbunden ist;
**dadurch gekennzeichnet, dass**
die Speichervorrichtung (310, 410) schreibgeschützt ist, wobei das Verfahren außerdem umfasst:
Autorisieren, durch das Sicherheitsmodul (340, 440), einer Aktualisierung von einer oder mehreren Softwarekomponenten in der Sequenz von Softwarekomponenten (320, 420) aufgrund der bereitgestellten resultierenden Messungen; und
nach einer erfolgreichen Autorisierung durch das Sicherheitsmodul (340, 440), Ändern, durch die CPU (330, 430), des Zustands der Speichervorrichtung (310, 410) auf schreibfähig, um die Aktualisierung von einer oder mehreren Softwarekomponenten auszuführen.

2. Verfahren (100) nach Anspruch 1, wobei der Autorisierungsschritt umfasst:
Vergleichen, durch das Sicherheitsmodul (340, 440), der bereitgestellten resultierenden Messung mit einer Referenzmessung, die durch das Sicherheitsmodul (340, 440) geschützt ist.

3. Verfahren (100) nach Anspruch 1 oder 2, das außerdem den folgenden Schritt umfasst:
Aktualisieren, durch das Sicherheitsmodul (340, 440), eines Registers mit der resultierenden Messung, wobei das Register der gemessenen Softwarekomponente entspricht;
wobei der Autorisierungsschritt aufgrund eines oder mehrerer Werte von jeweiligen Registern ausgeführt wird, die konfiguriert sind zum Aufbewahren einer Messung einer entsprechenden Softwarekomponente in der Sequenz von Softwarekomponenten (320, 420).

4. Verfahren (100) nach einem der Ansprüche 1 bis 3, wobei eine der Softwarekomponenten (320, 420) ein Modul einer Kernwurzel der Vertrauensmessung (Core Root of Trust for Measurement module, CRTM-Modul) ist und/oder wobei das Sicherheitsmodul (340, 440) ein vertrauenswürdiges Plattformmodul (Trusted Platform Module, TPM) ist.

5. Verfahren (100) nach Anspruch 4, wobei das Messen der Softwarekomponente ein Speichern der resultierenden Messung in einem Plattformkonfigurationsregister (Platform Configuration Register, PCR) (360, 460) aufweist, das dem Sicherheitsmodul (340, 440) zugeordnet ist.

6. Verfahren (100) nach einem der Ansprüche 1 bis 5, das außerdem umfasst:
Versiegeln eines Passworts mit dem Sicherheitsmodul (340, 440) aufgrund der resultierenden Messung;
als Reaktion auf eine Anforderung zum Aktualisieren einer oder mehrerer der Softwarekomponenten (320, 420), Entsiegeln des Passworts durch das Sicherheitsmodul (340, 440), und Bereitstellen des Passworts für die Speichervorrichtung (310, 410), um den Zustand der Speichervorrichtung (310, 410) auf schreibfähig zu verändern; und
Aktualisieren einer oder mehrerer der Softwarekomponenten (320, 420).

7. Verfahren (100) nach einem der Ansprüche 1 bis 5, wobei das Verändern des Zustands der Speichervorrichtung (310, 410) auf schreibfähig ein Ausgeben einer Anforderung an das Sicherheitsmodul (340, 440) umfasst, um einen oder mehrere Bitwerte in einen von einem oder mehreren Speicherplätzen in einem Speicher (450) des Sicherheitsmoduls (340, 440) zu schreiben, wobei der Speicherplatz in der Anforderung durch einen Indexwert festgelegt wird, der dem Speicherindex zugeordnet ist, und außerdem umfasst: Empfangen, durch das Sicherheitsmodul (340, 440), des einen oder der mehreren Bitwerte aus der Anforderung; Schreiben der Bitwerte in den Speicherplatz; und Weiterleiten der Bitwerte zu einem Mehrzweck-Eingangs-/Ausgangspin (General Purpose Input/Output pin, GPIO-Pin) (445) in dem Sicherheitsmodul (340, 440), wobei der GPIO-Pin (445) mit einem Schreibschutzpin (Write-Protection pin, WP-Pin) (425) der Speichervorrichtung (310, 410) verbunden ist, und wobei der Bitwert an dem WP-Pin (425) empfangen wird und in der Speichervorrichtung (310, 410) angewandt wird, um den Zustand der Speichervorrichtung (310, 410) auf schreibfähig zu verändern.

8. Verfahren (100) nach Anspruch 7, wobei das Sicherheitsmodul ein vertrauenswürdiges Plattformmodul ist und wobei die Anforderung ein TPM-NVRAM-Verwaltungsbefehl ist.

9. Computervorrichtung (300, 400), umfassend:
ein Sicherheitsmodul (340, 440), vorzugsweise ein vertrauenswürdiges Plattformmodul (Trusted Platform Module, TPM) (340, 440);
eine zentrale Verarbeitungseinheit (Central Processing Unit, CPU) (330, 430), wobei die CPU (330, 430) mit dem Sicherheitsmodul (340, 440) verbunden ist; und
eine Speichervorrichtung (310, 410), die konfiguriert ist zum Speichern einer Sequenz von Softwarekomponenten (320, 420) an einem Ort, von dem die CPU (330, 430) konfiguriert wird zum Laden eines ersten Befehls in einem Boot-Vorgang, wobei die CPU (330, 430) konfiguriert ist zum Ausführen jeder entsprechenden Softwarekomponente in der Sequenz von Softwarekomponenten (320, 420), wobei jede entsprechende Softwarekomponente konfiguriert ist zum Messen einer nächsten Softwarekomponente in der Sequenz, und zum Bereitstellen der resultierenden Messung für das Sicherheitsmodul (340, 440),
**dadurch gekennzeichnet, dass**
die Speichervorrichtung (310; 410) in einem schreibgeschützten Zustand ist;
wobei das Sicherheitsmodul (340, 440) konfiguriert ist zum Autorisieren einer Aktualisierung von einer oder mehreren Softwarekomponenten in der Sequenz von Softwarekomponenten (320, 420) aufgrund der bereitgestellten resultierenden Messungen; und
wobei die CPU (330, 430) oder das Sicherheitsmodul (340, 440) außerdem nach einer erfolgreichen Autorisierung durch das Sicherheitsmodul (340, 440) konfiguriert ist zum Verändern des Zustands der Speichervorrichtung (310, 410) auf schreibfähig, um eine Aktualisierung von einer oder mehreren Softwarekomponenten zu erlauben.

10. Computervorrichtung (300, 400) nach Anspruch 9, wobei das Sicherheitsmodul (340, 440) außerdem geeignet ist zum Vergleichen der bereitgestellten resultierenden Messung mit einer Referenzmessung, die durch das Sicherheitsmodul (340, 440) geschützt ist, um die Aktualisierung zu autorisieren.

11. Computervorrichtung (300, 400) nach Anspruch 9 oder 10, wobei das Sicherheitsmodul (340, 440) außerdem konfiguriert ist zum:
Aktualisieren eines Registers mit der resultierenden Messung, wobei das Register, der gemessenen Softwarekomponente entspricht; und
Autorisieren der Aktualisierung aufgrund eines oder mehrerer Werte von jeweiligen Registern, die konfiguriert sind zum Aufbewahren einer Messung einer entsprechenden Softwarekomponente in der Sequenz von Softwarekomponenten (320, 420).

12. Computervorrichtung (300, 400) nach einem der Ansprüche 9 bis 11, wobei eine oder mehrere der Softwarekomponenten (320, 420) eine Kernwurzel der Vertrauensmessung (Core Root of Trust for Measurement, CRTM) sind.

13. Computervorrichtung (300, 400) nach Anspruch 12, wobei die CPU (330, 430) außerdem konfiguriert ist zum:
Ausführen von einer der Softwarekomponenten in der Sequenz von Softwarekomponenten (320, 420), um ein Passwort mit dem Sicherheitsmodul (340, 440) aufgrund der resultierenden Messungen zu versiegeln;
wobei das Sicherheitsmodul (340, 440) geeignet ist, um das Passwort als Reaktion auf eine Anforderung zum Aktualisieren einer oder mehrerer der Softwarekomponenten (310, 420) zu entsiegeln, und um das Passwort für die Speichervorrichtung (310, 410) bereitzustellen, um den Zustand der Speichervorrichtung (310, 410) auf schreibfähig zu verändern, und um eine oder mehrere Softwarekomponenten der Softwarekomponenten (310, 420) zu aktualisieren.

14. Computervorrichtung (300, 400) nach einem der Ansprüche 9 bis 12, wobei
das Sicherheitsmodul (340, 440) einen Speicher (450) und einen Mehrzweck-Eingangs-/Ausgangspin (General Purpose Input/Output pin, GPIO-Pin) (445) aufweist, der mit dem Speicher (450) verbunden ist und außerdem konfiguriert ist zum Empfangen einer Anforderung von der CPU (330, 430), um den Zustand der Speichervorrichtung (310, 410) auf schreibfähig zu verändern, wobei die Anforderung einen oder mehrere Bitwerte und einen Indexwert enthält, der einem von einem oder mehreren Speicherplätzen in dem Speicher (450) zugeordnet ist, wobei das Sicherheitsmodul (330, 440) außerdem konfiguriert ist zum Empfangen des einen oder der mehreren Bitwerte aus der Anforderung und zum Schreiben der Bitwerte in den Speicherplatz, wobei das Sicherheitsmodul (340, 440) außerdem konfiguriert ist, um nach dem Schreiben die Bitwerte aus dem Speicher (450) zu dem GPIO-Pin (445) weiterzuleiten; und
wobei die Speichervorrichtung (330, 410) einen Schreibschutzpin (Write-Protection pin, WP-Pin) (425) aufweist, der mit dem GPIO-Pin (445) verbunden ist und konfiguriert ist zum Verändern seines Zustands auf schreibfähig als Reaktion auf das Empfangen eines Bitwerts, der dem Zustand zugeordnet ist.

15. Computervorrichtung (300, 400) nach Anspruch 14, wobei das Sicherheitsmodul ein vertrauenswürdiges Plattformmodul ist und wobei die Anforderung ein TPM-NVRAM-Verwaltungsbefehl ist.

## Revendications

1. Procédé (100) pour une mise en œuvre informatique de confiance, le procédé (100) comprenant :
l'exécution, par une unité centrale, CPU, (330, 430), de chaque composant logiciel respectif dans une séquence de composants logiciels (320, 420) stockés sur un dispositif de stockage (310, 410) en un emplacement depuis lequel la CPU (330, 430) est configurée pour charger une première instruction lors d'un processus d'amorçage ;
la mesure, par chaque composant logiciel respectif, d'un composant logiciel suivant dans la séquence, et la fourniture de la mesure résultante à un module de sécurité (340, 440) connecté à la CPU (330, 430) ;
**caractérisé en ce que**
ledit dispositif de stockage (310, 410) est protégé en écriture, dans lequel le procédé comprend en outre
l'autorisation, par le module de sécurité (340, 440), d'une mise à jour du ou des composants logiciels dans la séquence de composants logiciels (320, 420) sur la base des mesures résultantes fournies ; et
suite à la réussite de l'autorisation par le module de sécurité (340, 440), la modification, par la CPU (330, 430), du statut du dispositif de stockage (310, 410) pour le rendre autorisé en écriture de façon à exécuter la mise à jour du ou des composants logiciels.

2. Procédé (100) selon la revendication 1, dans lequel l'étape d'autorisation comprend :
la comparaison, par le module de sécurité (330, 430), de la mesure résultante fournie avec une mesure de référence protégée par le module de sécurité (340, 440).

3. Procédé (100) selon la revendication 1 ou 2, comprenant en outre l'étape suivante :
la mise à jour, par le module de sécurité (340, 440), d'un registre avec la mesure résultante, ledit registre correspondant au composant logiciel mesuré ;
dans lequel l'étape d'autorisation est exécutée sur la base d'une ou plusieurs valeurs de registres respectifs configurés pour contenir une mesure d'un composant logiciel correspondant dans la séquence de composants logiciels (320, 420).

4. Procédé (100) selon l'une quelconque des revendications 1 à 3, dans lequel l'un des composants logiciels (320, 420) est un module racine centrale de confiance de mesure, CRTM et/ou le module de sécurité (340, 440) est un module plateforme de confiance, TPM.

5. Procédé (100) selon la revendication 4, dans lequel la mesure dudit composant logiciel inclut le stockage de la mesure résultante dans un registre de configuration de plateforme, PCR, (360, 460) associé au module de sécurité (340, 440).

6. Procédé (100) selon l'une quelconque des revendications 1 à 5, comprenant en outre :
le blocage d'un mot de passe pour le module de sécurité (340, 440) sur la base de la mesure résultante ;
en réponse à une demande de mise à jour d'un ou plusieurs desdits composants logiciels (320, 420), le déblocage du mot de passe par ledit module de sécurité (340, 440) et la fourniture dudit mot de passe au dispositif de stockage (310, 410) de façon à modifier le statut du dispositif de stockage (310, 410) pour le rendre autorisé en écriture ; et
la mise à jour du ou des composants logiciels (320, 420).

7. Procédé (100) selon l'une quelconque des revendications 1 à 5, dans lequel la modification du statut du dispositif de stockage (310, 410) pour le rendre autorisé en écriture comprend l'émission d'une demande au module de sécurité (340, 440) d'écrire une ou plusieurs valeurs binaires sur l'un d'un ou plusieurs espaces de mémoire dans une mémoire (450) du module de sécurité (340, 440), ledit espace de mémoire étant spécifié dans la demande par une valeur d'indice associée à l'indice de la mémoire, et comprend en outre la réception, par ledit module de sécurité (340, 440), de ladite ou desdites valeurs binaires de la demande, l'écriture desdites valeurs binaires sur ledit espace de mémoire et le transfert desdites valeurs binaires à une broche d'entrée/sortie à usage général, GPIO, (445) dans le module de sécurité (340, 440), dans lequel la broche GPIO (445) est connectée à une broche de protection en écriture, WP, (425) du dispositif de stockage (310, 410), et dans lequel la valeur binaire est reçue sur la broche WP (425) et appliquée dans le dispositif de stockage (310, 410) pour modifier le statut du dispositif de stockage (310, 410) pour le rendre autorisé en écriture.

8. Procédé (100) selon la revendication 7, dans lequel le module de sécurité est un module plateforme de confiance et la demande est une commande de gestion NVRAM TPM.

9. Dispositif informatique (300, 400) comprenant :
un module de sécurité (340, 440), de préférence un module plateforme de confiance (340, 440), TPM ;
une unité centrale, CPU (330, 430), la CPU (330, 430) étant connectée au module de sécurité (340, 440) ; et
un dispositif de stockage (310, 410) configuré pour stocker une séquence de composants logiciels (320, 420) en un emplacement depuis lequel la CPU (330, 430) est configurée pour charger une première instruction lors d'un processus d'amorçage, dans lequel
la CPU (330, 430) est configurée pour exécuter chaque composant logiciel respectif dans la séquence de composants logiciels (320, 420), chaque composant logiciel respectif étant configuré pour mesurer un composant logiciel suivant dans la séquence, et pour fournir une mesure résultante au module de sécurité (340, 440),
**caractérisé en ce que**
ledit dispositif de stockage (310, 410) a un statut protégé en écriture ;
le module de sécurité (340, 440) est configuré pour autoriser une mise à jour d'un ou plusieurs composants logiciels dans la séquence de composants logiciels (320, 420) sur la base des mesures résultantes fournies ; et
la CPU (330, 430) ou le module de sécurité (340, 440) est en outre configuré(e) pour modifier le statut du dispositif de stockage (310, 410) pour le rendre autorisé en écriture suite à la réussite de l'autorisation par le module de sécurité (340, 440) de façon à permettre une mise à jour d'un ou plusieurs composants logiciels.

10. Dispositif informatique (300, 400) selon la revendication 9, dans lequel le module de sécurité (330, 430) est en outre conçu pour comparer la mesure résultante fournie avec une mesure de référence protégée par le module de sécurité (330, 440) pour autoriser la mise à jour.

11. Dispositif informatique (300, 400) selon la revendication 9 ou 10, dans lequel le module de sécurité (340, 440) est en outre configuré pour :
mettre à jour un registre avec la mesure résultante, ledit registre correspondant au composant logiciel mesuré ; et
autoriser la mise à jour sur la base d'une ou plusieurs valeurs de registres respectifs configurés pour contenir une mesure d'un composant logiciel correspondant dans la séquence de composants logiciels (320, 420).

12. Dispositif informatique (300, 400) selon l'une quelconque des revendications 9 à 11, dans lequel un ou plusieurs des composants logiciels (320, 420) sont une racine centrale de confiance de mesure, CRTM.

13. Dispositif informatique (300, 400) selon la revendication 12, dans lequel ladite CPU (330, 430) est en outre configurée pour :
exécuter l'un des composants logiciels dans la séquence de composants logiciels (320, 420) pour bloquer un mot de passe pour le module de sécurité (340, 440) sur la base des mesures résultantes ;
dans lequel le module de sécurité (330, 440) est conçu pour débloquer, en réponse à une demande de mise à jour d'un ou plusieurs desdits composants logiciels (310, 420), le mot de passe et pour fournir ledit mot de passe au dispositif de stockage (310, 410) de façon à modifier le statut du dispositif de stockage (310, 410) pour le rendre autorisé en écriture ; et pour mettre à jour un ou plusieurs composants logiciels desdits composants logiciels (310, 420).

14. Dispositif informatique (300, 400) selon l'une quelconque des revendications 9 à 12, dans lequel
le module de sécurité (340, 440) inclut une mémoire (450) et une broche d'entrée/sortie à usage général, GPIO (445) connectée à ladite mémoire (450) et est en outre configuré pour recevoir une demande depuis la CPU (330, 430) de modification du statut du dispositif de stockage (310, 410) pour le rendre autorisé en écriture, ladite demande incluant une ou plusieurs valeurs binaires et une valeur d'indice associée à l'un d'un ou plusieurs espaces de mémoire dans ladite mémoire (450), dans lequel le module de sécurité (330, 440) est en outre configuré pour recevoir ladite ou lesdites valeurs binaires de la demande et écrire lesdites valeurs binaires sur ledit espace de mémoire, dans lequel le module de sécurité (340, 440) est en outre configuré pour transférer lesdites valeurs binaires de ladite mémoire (450) à ladite broche GPIO (445) lors de l'écriture ; et
le dispositif de stockage (330, 410) inclut une broche de protection en écriture, WP (425), connectée à ladite broche GPIO (445) et est configuré pour modifier son statut pour le rendre autorisé en écriture en réponse à la réception d'une valeur binaire associée audit statut.

15. Dispositif informatique (300, 400) selon la revendication 14, dans lequel le module de sécurité est un module plateforme de confiance et la demande est une commande de gestion NVRAM TPM.
